Europäisches Patentamt

European Patent Office

Office européen des brevets

(11) Veröffentlichungsnummer: **0 023 347**
**B1**

## (12) EUROPÄISCHE PATENTSCHRIFT

(45) Veröffentlichungstag der Patentschrift:
**02.11.83**

(51) Int. Cl.³: **C 09 K 17/00**

(21) Anmeldenummer: **80104351.4**

(22) Anmeldetag: **24.07.80**

(54) Verfahren zur Verbesserung der Bodenqualitäten und Mittel zu dessen Ausführung.

(30) Priorität: **31.07.79 CH 7049/79**

(43) Veröffentlichungstag der Anmeldung:
**04.02.81 Patentblatt 81/5**

(45) Bekanntmachung des Hinweises auf die Patenterteilung:
**02.11.83 Patentblatt 83/44**

(84) Benannte Vertragsstaaten:
**AT BE DE IT LU NL SE**

(56) Entgegenhaltungen:
**DE - A - 2 737 941**
**DE - C - 839 944**
**US - A - 2 801 984**
**US - A - 2 856 380**
**US - A - 3 021 298**

(73) Patentinhaber: **ISAFLEX AG, Spitalstrasse 74,
CH-8952 Schlieren (CH)**

(72) Erfinder: **Helbling Gottfried, Ringstrasse 22,
CH-8808 Pfäffikon (CH)**

(74) Vertreter: **Maspoli, Renato A., EGLI PATENTANWÄLTE
Horneggstrasse 4, CH-8008 Zürich (CH)**

## Verfahren zur Verbesserung der Bodenqualitäten und Mittel zu dessen Ausführung.

Die hier beschriebene Erfindung betrifft ein Verfahren zur Erhöhung der Wasseraufnahmefähigkeit, zur Verbesserung der Wasserretention, zur Erniedrigung der Wasserverdunstung und zur stabilisierenden Auflockerung von Wüstenböden und von Böden ähnlicher Beschaffenheit, aber auch von eingetopften Pflanzenkulturböden unter Wüstenklimatas, bzw. in geschlossenen Räumen.

Als Mittel zur Ausführung dieses Verfahrens dient ein Granulat, das im wesentlichen aus Acrylamid-Polymeren besteht, das eine mittlere Körnung von 0,5 bis 5 mm aufweist, das wasserquellbar, gelierbar und schwer verrottbar ist und das permanent Wasser zu binden und wieder abzugeben vermag.

Verfahren zur Verbesserung der Bodenqualitäten in bezug auf Wasserhaushalt sind bekannt. Zum Teil sind es mechanische Verfahren, wie beispielsweise Drainage, zum Teil physikalische, wie beispielsweise die Beigabe von geschäumten Kunststoffpartikeln zum Bodenmaterial.

Die US-A-3 973 355, die am 10. August 1976 erteilt worden ist, beschreibt ein Verfahren zur Herstellung von behälterfreien Pflanzenbödenkörper, bei dem Pflanzenkultivationsmaterialien wie Vermiculite, Perlite, Sand, Sägemehl, Holzfasern, Humus, usw. in Form von Partikeln mit einem wässrigen Gel eines wasserunlöslichen, in Wasser quellbaren vernetzten Polymer, beispielsweise Polyacrylamid, äusserlich beschichtet werden, die erhaltene Mischung in eine dreidimensionale Form gebracht wird und diese Form dann soweit getrocknet wird, dass sie beim Wiederanfeuchten nicht zerfällt. Es leuchtet sofort ein, dass ein solches Verfahren ungeeignet ist zur Verbesserung der Bodenqualitäten von Rasenböden oder noch grösseren Kulturflächen. Ebenso kann das obige Verfahren kaum durch den Normalhalter von eingetopften Pflanzen angewendet werden.

Die DE-A-2 737 941 beschreibt ein anderes Bodenverbesserungsmittel. Es ist dies immer ein polymerer Polyelektrolyt, der aus bestimmten anionischen und kationischen Komponenten mittels ionischer Polymerisation erhalten wird.

Tatsächlich ist das Bodenverbesserungsmittel gemäss dieser DE-Offenlegungsschrift immer der Polyelektrolyt, der bei Neutralisation von Kaliumacrylat und Acrylamid erhalten wird.

Ein mittels Radikalpolymerisation erhaltenes Polymer wird nirgends in der genannten DE-Offenlegungsschrift erwähnt, ebenso sind Alkylidenbisacrylamide, speziell N,N′-Methylenbisacrylamid als Copolymerisant von den möglichen Polymerisationskomponenten ausgeschlossen.

Die US-A-2 856 380 lehrt ein Bodenabdichtungsverfahren, bei dem dem Bodenmaterial polymerisierbare, fluide Mischungen zugesetzt werden, welche dann im Gemisch polymerisiert werden und so den Boden verfestigen. Der derart verfestigte Boden kann nicht als Kulturboden bezeichnet werden, da er im wesentlichen wasserundurchlässig ist (Patentansprüche 1, 6, 9 und 10 der genannten US-Patentschrift).

Wenn auch das Verfahren dieser US-Patentschrift von Rohmaterialien ausgeht, die im wesentlichen diejenigen der hier beschriebenen Erfindung darstellen, sind das Verfahren (Injizierung von fluiden Mischungen) und das Produkt (verfestigte Böden, Fundamente) von dieser Erfindung verschieden. Die obige US-Patentschrift legt das erfindungsgemässe Verfahren, d.h. die vorgängige, kontrollierte Kopolymerisation und die nachträgliche Mischung des Polymerisats mit natürlichen Bodenmaterialien zum Erhalt von Kulturböden, auch nicht nahe.

Polyacrylamidgele, beispielsweise solche, die mittels Copolymerisation von Acrylamid und Methylen-bis(Acrylamid) erhalten werden, sind in der Fachliteratur ausschliesslich als in der Chromatographie einsetzbare Molekularsiebe beschrieben (siehe beispielsweise Römpp, 6. Auflage).

Das erfindungsgemässe Verfahren zur Erhöhung der Wasseraufnahmefähigkeit, zur Verbesserung der Wasserretention, zur Erniedrigung der Wasserverdunstung und zur stabilisierenden Auflockerung von Wüstenböden und von Böden ähnlicher Beschaffenheit, aber auch von eingetopften Pflanzenkulturböden unter Wüstenklimatas bzw. in geschlossenen Räumen, ist gekennzeichnet durch die folgenden Verfahrensschritte:

– örtliche oder ortsfremde Zubereitung einer Bodenmischung aus dem vorliegenden Bodenmaterial und aus 1 bis 20% – bezogen auf das Mischungsgewicht – quervernetzten Acrylamid-Polymeren, erhalten mittels Copolymerisation von überwiegend Acrylamid und wenig N,N′-Methylenbisacrylamid in Form eines wasserquellbaren, schwer verrottbaren, permanent Wasser ad- und desorbierenden Granulates mit einer mittleren Korngrösse zwischen 0,5 und 5 mm,

– Einbringen der genannten Bodenmischung im Hauptwurzelbereich der zu pflanzenden Kulturen und

– Bewässerung der eingebrachten Bodenmischung auf einen Quellgrad des Granulates von ≥ 200 Vol.-%, bezogen auf das Ausgangsmaterial.

Das erfindungsgemässe Verfahren kann beim Vorliegen von feinen, sandigen Böden mit einem Granulat einer mittleren Korngrösse von ca. 0,5 mm und beim Vorliegen von schweren, lehmhaltigen Böden mit einem solchen einer mittleren Korngrösse von über 1 mm ausgeführt werden.

Bei der Zubereitung der Bodenmischung können derselben übliche Bodenkonditioniermittel, Dünger, Pestizide, usw. zugegeben werden.

Das Mittel zur Ausführung des erfindungsgemässen Verfahrens, d.h. das Granulat, weist eine mittlere Körnung von 0,5 bis 5 mm auf, ist im Wasser quellbar und gelierbar und wird durch die üblichen Bodenbestandteile nicht verrottet. Es vermag permanent einen hohen Anteil von Wasser zu binden; es gibt dieses Wasser aber auch leicht wieder ab.

Erstaunlicherweise hat es sich gezeigt, dass das erfindungsgemässe Verfahren sowohl bei Wüstenböden wie auch bei Topfkultivationsböden ausgezeichnete Resultate zeigt.

Als Beispiel für das erfindungsgemässe Verfahren werden nun einige Anwendungen beschrieben.

Anwendung 1 Unter feinen Wüstensand wurden ca. 20 kg trokkenes Polyacrylamid-Granulat in ca. 1 m³ Sand gemischt. Das Granulat bestand aus einem unlöslichen, nichttoxischen Polymermaterial, das mittels Copolymerisation von 95 Gew.-% Acrylamid und 5 Gew.-% N,N'-Methylenbisacrylamid erhalten worden war. Es lag in einer Körnung von 2 bis 3 mm vor. Dieses Material wurde in Wurzelhöhe ausgebreitet und dann ausgiebig bewässert. Der darin angepflanzte Rasen wuchs in normaler Zeit und musste nachher nur noch einmal pro Woche gewässert werden, im Gegensatz zum Rasen, der in konventionell präparierten Wüstenböden gepflanzt worden war und täglich gewässert werden musste.

Die Wasseraufnahmefähigkeit dieses erfindungsgemäss präparierten Bodens lag, verglichen mit dem reinen Bodenmaterial, d.h. mit feinem Wüstensand, bei Werten von über 60% mehr als beim Wüstensand. Die Wasserretention, gemessen 1 Tag nach der Wässerung, war beim erfindungsgemäss präparierten Boden über 100% höher als beim nichtpräparierten Bodenmaterial. Die Höchsttemperaturen an der Bodenoberfläche betrugen dabei über 70 °C.

Anwendung 2

Zur Stabilisierung von Sanddünenböden wurden in angepassten Abständen verschiedene wüstenbeständige Bäume gepflanzt, einmal in erfindungsgemäss mit dem Granulat gemäss Anwendung 1 präparierten Böden um den Wurzelbereich und einmal in nichtpräparierten Böden. Nach mehrmaliger Bewässerung aller Pflanzen wurden die Bäume dem natürlichen Wüstenklima überlassen.

Nach einem Jahr zeigt es sich, dass die Bäume im nichtpräparierten Boden dem Dünendruck mangels Verwurzelung allesamt nicht standgehalten hatten, währenddem die Bäume im erfindungsgemäss präparierten Boden zum grössten Teil noch standen und den Dünenfortgang eingedämmt hatten.

Das erfindungsgemässe Verfahren führt also, zusammen mit einer geeigneten Bepflanzung, indirekt zu einer Stabilisierung des Wüstenbodens. Die Verdunstung des Wassers aus dem Boden war reduziert: Einige Tage nach der letzten Bewässerung wurden Bodenproben untersucht. Die präparierten Böden wiesen noch eine deutlich fühlbare Feuchtigkeit auf, was bei den nichtpräparierten Böden nicht der Fall war.

Durch die Verminderung der Bewässerung in wüstenklimatischen Bedingungen wird, wegen des Restsalzgehaltes des zur Bewässerung in Wüstengebieten eingesetzten Wassers, übrigens auch die vom Boden aufgenommene Salzmenge reduziert.

Anwendung 3 Topfpflanzen, die vor der erfindungsgemässen Präparation des Bodens mit dem Granulat gemäss Anwendung 1, jedoch mit der Korngrösse 1–2 mm, täglich begossen werden mussten, benötigten nach der Präparation nur noch halb- oder wöchentliche Bewässerung; Pflanzen, die wöchentlich begossen werden mussten, lediglich noch eine Bewässerung in 3 Wochen.

**Patentansprüche**

1. Verfahren zur Erhöhung der Wasseraufnahmefähigkeit, zur Verbesserung der Wasserretention, zur Erniedrigung der Wasserverdunstung und zur stabilisierenden Auflockerung von Wüstenböden und von Böden ähnlicher Beschaffenheit, aber auch von eingetopften Pflanzenkulturböden unter Wüstenklimatas, bzw. in geschlossenen Räumen, gekennzeichnet durch
- örtliche oder ortsfremde Zubereitung einer Bodenmischung aus dem vorliegenden Bodenmaterial und aus 1 bis 20% – bezogen auf das Mischungsgewicht – quervernetztem, wasserunlöslichem Acrylamid-Polymeren, erhalten mittels Copolymerisation von überwiegend Acrylamid und wenig N,N'-Methylenbisacrylamid in Form eines wasserquellbaren, schwer verrottbaren, permanent Wasser ad- und desorbierenden Granulates mit einer mittleren Korngrösse zwischen 0,5 und 5 mm,
- Einbringen der genannten Bodenmischung im Hauptwurzelbereich der zu pflanzenden Kulturen und
- Bewässerung der eingebrachten Bodenmischung auf einen Quellgrad des Granulates von ≥ 200 Vol.-%, bezogen auf das Ausgangsmaterial.

2. Verfahren gemäss Patentanspruch 1, in dem bei feinen, sandigen Böden ein Granulat auf Basis von Polyacrylamid mit einer mittleren Korngrösse von ca. 0,5 mm und bei schweren, lehmhaltigen Böden ein solches mit einer mittleren Korngrösse von über 1 mm eingesetzt wird.

3. Verfahren gemäss Patentanspruch 1, in dem bei der Zubereitung der Bodenmischung derselben noch übliche Bodenkonditioniermittel, Dünger, Pestizide usw. zugegeben werden.

**Claims**

1. A method for increasing the water absorptivity, improving the water retention, reducing the water evaporation and for stabilized loosening or breaking up of desert soils and soils with similar characteristics, but also potted plants growing soils under desert climatic conditions or in closed spaces, characterized by the following stages:

– local or remote preparation of a soil mixture from the present soil material and 1 to 20% – based on the weight of the mixture – of crosslinked, unsoluble polyacrylamide obtained in copolymerizing mainly acrylamide and little N,N′-methylene bisacrylamide in the form of a water-swellable, difficultly rottable, permanently water absorbing and desorbing granular material with an average particle size between 0,5 and 5 mm;

– introduction of this soil mixture into the main root area of the plants to be planted; and

– watering the introduced soil mixture to a degree of swelling of the granular material to ≥ 200% of the volume of the original dry polyacrylamide.

2. A method according to claim 1, wherein a granular material based on acrylamide with an average particle size of approximately 0,5 mm is used for fine sandy soils, whereas the average particle size exceeds 1 mm for heavy, loamcontaining soils.

3. A method according to claim 1, wherein conventional soil conditioning agents, fertilizers, pesticides, etc. are added during the preparation of the soil mixture.

## Revendications

1. Procédé pour augmenter la capacité d'absorption d'eau, améliorer la rétention d'eau, diminuer l'évaporation et ameublir de façon stabilisatrice des sols de déserts et des sols de nature analogue, ainsi que des sols de culture de plantes en pots dans des climats désertiques, et respectivement dans des espaces fermés, caractérisé par

– une préparation locale ou non d'un mélange de sol à partir de la matière de sol présente et de 1 à 20%, par rapport au poids du mélange, de polyacrylamide réticulé, insoluble dans l'eau, obtenu par copolymérisation principalement d'acrylamide et d'un peu de N,N′-méthylènebis-acrylamide, sous la forme d'un produit de granulation gonflable par l'eau, difficilement pourissable, qui adsorbe et désorbe l'eau en permanence et présente une dimension granulaire moyenne comprise entre 0,5 et 5 mm,

– l'introduction du mélange de sol précité dans la zone des racines principales des cultures à planter, et

– l'irrigation du mélange de sol introduit jusqu'à un degré de gonflement du produit de granulation de ≥ 200% en volume relatif au polyacrylamide sec.

2. Procédé suivant la revendication 1, dans lequel on met en œuvre, pour des sols fins, sableux, un produit de granulation à base de polyacrylamide présentant une dimension granulaire moyenne d'environ 0,5 mm, et, pour des sols lourds, limoneux, un produit de granulation présentant une dimension granulaire moyenne supérieure à 1 mm.

3. Procédé suivant la revendication 1, dans lequel des produits de conditionnement de sol courants, des engrais, des pesticides, etc., sont encore ajoutés au mélange de sol, lors de la préparation de celui-ci.